# EUROPÄISCHE PATENTANMELDUNG

(11) **EP 1 087 241 A2**
(43) Veröffentlichungstag der Anmeldung: **28.03.2001**
(21) Anmeldenummer: 00120852.9
(22) Anmeldetag: 25.09.2000
(51) Int. Cl.: G02B 5/20

(54) **Beschichteter Gegenstand mit Färbung und Verfahren zu seiner Herstellung**

(30) Priorität: 23.09.1999 DE 19945730
(71) Anmelder: Fraunhofer-Gesellschaft zur Förderung der angewandten Forschung e.V., 80363 München (DE)
(72) Erfinder: Matthée, Thorsten, 38527 Meine (DE); Vergöhl, Michael, 38162 Cremlingen (DE); Neumann, Frank, 38100 Braunschweig (DE); Malkomes,Niels, 38106 Braunschwig (DE)
(74) Vertreter: Pfenning, Meinig & Partner GbR

(57) **Zusammenfassung**

Die Erfindung betrifft einen beschichteten Gegenstand mit Rotfärbung, der an und/oder auf seiner Oberfläche ein- oder mehrfach eine Abfolge aus einer Metalloxidschicht und einer weiteren Metallschicht aufweist, wobei die oberste Metallschicht entweder die Oberfläche des Gegenstandes bildet oder eine Dicke zwischen 8 und 14 nm aufweist und von einer weiteren Metalloxidschicht bedeckt ist und wobei die weiteren Metallschichten eine Dicke zwischen 8 und 14 nm besitzen.

## Beschreibung

Die Erfindung betrifft einen Gegenstand mit einer optisch ansprechenden rotgefärbten Beschichtung sowie ein Verfahren zu seiner Herstellung.

Derartige Gegenstände und Schichtsysteme werden als farbgebendes Finish auf beliebigen Gegenständen verwendet.

Derzeitige Schichtsysteme zur Erzielung eines optischen Effekts sind typischerweise vielschichtige Multilagensysteme mit einer alternierenden Folge von hoch- und niedrigbrechenden Oxiden ("high/low-Schichten"). Mit diesen reinen Oxid-Systemen ein nahezu beliebiges Schichtdesign für einen bestimmten optischen Effekt eingestellt werden. Ihr Nachteil ist, daß zur Erlangung intensiver Farbtöne aufwendige Depositionstechniken notwendig sind, weil oftmals eine Vielzahl von Doppelschichten (high/low-Abfolgen) erforderlich sind, da die Schichtdicken sehr genau eingehalten werden müssen, was mit aufwendiger Messtechnik erfolgt; zudem müssen mindestens zwei verschiedene Materialien vorgehalten werden.

Farbige Schichten, deren Farbeindruck auf dem Effekt der Interferenz optischer Lichtstrahlung beruht, haben eine Vielzahl von Anwendungen für dekorative Zwecke und als optische Funktionsschichten wie Filter u.ä.. Metalle wie Titan, Silber, Aluminium, Chrom u.ä. erzeugen alleine aufgrund ihrer optischen Konstanten (Brechungsindex und Absorptionsindex) keinen Farbeindruck, sie erscheinen grau oder "silbrig". Mit dünnen dielektrischen Schichten (Metalloxide, - nitride,
-carbonitride) auf Metallsubstraten mit einer Dicke von typisch 50 nm bis einigen hundert Nanometern lassen sich dagegen aufgrund von Interferenzeffekten eine Reihe von Farbtönen realisieren. Infolge der hohen Reflexion vom Metallsubstrat sind die Farbtöne derartiger Schichtsysteme im allgemeinen jedoch nur schwach gesättigt.

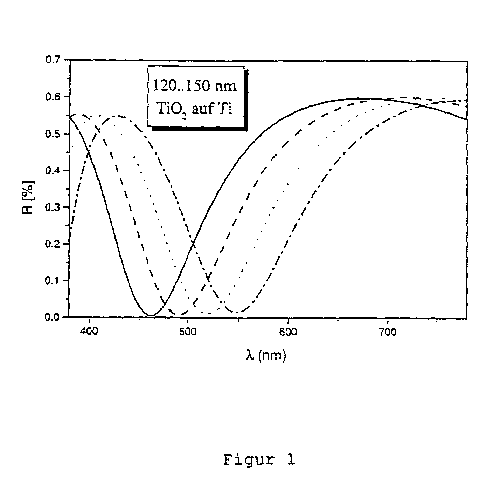

Zudem lassen sich bestimmte Farben mit einem einfachen herkömmlichen Schichtaufbau nicht realisieren. So ist bekannt, dass mit einer Ti0₂-Schicht auf einem Titan-Substrat keine roten Farbtöne zu erzielen sind. Die Ursache ist darin begründet, dass mit einem Maximum der Reflexion im roten Spektralbereich (620-650 nm) zugleich ein weiteres Maximum entsprechend der nächsthöheren Ordnung im blau-grünen Spektralbereich (440-520 nm) auftritt, wie es in Abbildung 1 anhand von Reflexionsspektren einer TiO₂-Schicht auf einem Titan-Substrat dargestellt ist. Dabei zeigt die durchgezogene Linie ein System mit einer TiO₂-Schichtdicke von 120 nm, die gestrichelte Linie von 130 nm, die gepunktete Linie von 140 nm und die strichgepunktete Linie eine Schichtdicke des TiO₂ von 150 nm. In diesen Fällen wirkt die Schicht nicht rot, sondern weist einen blau-roten bis purpurnen Farbeindruck auf. Auch die Verwendung deutlich dickerer TiO₂-Schichten führt nicht zum Erfolg, da sich in diesem Fall der spektrale Abstand der verschiedenen Reflexionsmaxima reduziert, d.h. die nächsthöhere Ordnung würde dann bereits bei 500 nm auftreten, so dass ein noch farbloserer Eindruck entsteht.

In der US 4,702,955 wird ein Gegenstand beschrieben, auf den eine Abfolge von Metallschichten und Metalloxidschichten aufgetragen ist, wobei die jeweiligen Schichtdicken für die Metallschichten zwischen 15 und 50 nm und für die Metalloxidschichten zwischen 42 und 220 nm betragen. Damit lassen sich keine reinen rotgefärbten Schichtsysteme erzeugen.

Die US 5,458,928 beschreibt eine Methode zur Kontrolle der Oxid-Schichtdicke bei der anodischen Oxidation beschrieben. In der GB 2 063 920 wird eine Methode und ein Verfahren beschrieben, bei dem zunächst eine anodisierbare Schicht auf ein Substrat aufgebracht wird, die dann in einem zweiten Schritt durch Anodisieren oxidiert wird, so dass eine Interferenzschicht entsteht.

Aufgabe der vorliegenden Erfindung ist es, einen Gegenstand und ein Verfahren zur Herstellung dieses Gegenstandes anzugeben, welches sehr einfach ist und dennoch die bisher auf der Basis von Interferenzschichtsystemen erreichbare Farbpalette um eine Vielzahl intensiver Tönungen in rotem Bereich erweitert.

Diese Aufgabe wird durch den Gegenstand gemäß Anspruch 1 und dem Verfahren gemäß Anspruch 14 gelöst. Vorteilhafte Weiterbildungen des erfindungsgemäßen Gegenstandes und des erfindungsgemäßen Verfahrens werden in den jeweiligen abhängigen Ansprüchen gegeben.

Die Lösung des Problems besteht folglich in einem Metalloxid-Metall-Schichtsystem wobei das Metall als optisch wirksame Schicht dient. Dabei wird eine so geringe Metallschichtdicke eingestellt, dass die Transparenz noch so hoch ist, dass es zu Interferenzeffekten trotz Verwendung von Metallen kommt. Es ist vorteilhaft, dasselbe Element für die Metallschicht (z. B. Ti oder Nb) und für die meist dielektrische Metalloxidschicht (z. B. TiO₂ oder NbO₂) zu verwenden. Dies hat den Vorteil, dass die Farbe des Multilagensystems allein durch die Zufuhr bzw. Nicht-Zufuhr von Sauerstoff für den Oxidationsprozess der abschließenden Metallschicht zur Bildung einer Metalloxidschicht einstellbar ist. Erfindungsgemäß ist also sowohl der unfertige Gegenstand mit abschließender metallischer Oberflächenschicht, die noch oxidiert werden soll, als auch der fertige Gegenstand, der eine Metalloxid-Oberfläche aufweist, von der vorliegende Erfindung umfaßt.

Das erfindungsgemäße Metalloxid-Metall-Schichtsystem besteht in seiner einfachsten Ausführung aus zwei Schichten aus einer Metalloxidschicht und einer Metallschicht auf einem Substrat, wobei die Dicke der Metallschicht nach Oxidation der Metalloberfläche zwischen 8 und 14 nm, vorteilhafterweise zwischen 10 und 12 nm beträgt. Dies ist insbesondere bei einem metallischen Substrat vorteilhaft bei dem sich dann eine Metalloxidschicht auf dem metallischen Substrat befindet, und darauf die Metallschicht, die in fertigem Zustand wiederum von einer Metalloxidschicht bedeckt ist.

Insbesondere bei nichtmetallischen Substraten bietet sich als Minimalschichtsystem ein System aus Substrat, erster Metalloxidschicht, Metallschicht, und darauf einer zweiten Metalloxidschicht an. Wird eine rote Farbe mit besonders guter Farbsättigung gewünscht, so kann ein Schichtstapel bestehend aus mindestens zwei Metall-Oxidschichten auf einem Metallsubstrat gewählt werden, zwischen denen sich jeweils eine 8-14 nm dicke Metall-Zwischenschicht befindet. Das gesamte Schichtsystem hat dann bei Verwendung von Titan als Metall den Aufbau: Substrat aus Titan - Oxidschicht 1 (Ti0₂) - Zwischenschicht (Titan) - Oxidschicht 2 (Ti0₂). Überraschend wurde gefunden, dass durch diese Herstellung des Gegenstandes basierend beispielsweise auf Titan und Ti0₂ ein roter Farbton hergestellt werden konnte, der eine deutlich bessere (höhere) Farbsättigung aufweist als einfache Schichtsysteme.

Entscheidend ist hierbei unter anderem, daß der Gegenstand im verkaufsfertigen Zustand auf seiner Oberfläche mit einer Metallschicht abschließen und die letzte Metalloxidschicht fehlen kann. Der Anwender kann dann diese Metalloberfläche selbst oxidieren, wobei er das Ausmaß der Oxidation in Abhängigkeit von gewünschtem Farbton und Farbtiefe wählen kann. Selbstverständlich kann der Gegenstand jedoch auch unmittelbar mit der abschließenden Metalloxidschicht versehen werden.

Bei Verwendung eines Dreischichtsystems (z. B. Metallsubstrat - Oxid - Metallzwischenschicht - Metalloxid) kann sogar ein nasschemisches Verfahren zur Oxidation der obersten Metallschicht und Erzeugung der abschließenden Metalloxidschicht eingesetzt werden. Das hat den Vorteil, dass keine aufwendige Vakuumtechnik eingesetzt werden muss, sondern verhältnismäßig günstige galvanische Verfahren eingesetzt werden können.

Die gewünschte Erweiterung der Farbpalette kann auch mit anderen Metallen, die Oxide bilden (z.B. Nb, Ta, Al, Ag, Cr, Ni, Cu, ...) erreicht werden. Es ist auch möglich, Legierungen dieser Materialien als Zwischenschicht einzusetzen.

Ein Schichtsystem muss nicht nur aus einem Dreischichtsystem mit nur einer metallischen oder halbleitenden Zwischenschicht bestehen. Die Schichtabfolge kann erhöht werden, um die optischen Eigenschaften weiter gezielt zu verändern. Dies ist beispielsweise durch die Herstellung eines N-Schichtsystems in folgender Form möglich:
Substrat - Oxidschicht 1 - Zwischenschicht 1 - Oxidschicht 2 - Zwischenschicht 2 -... - Zwischenschicht (N-1) [- Oxidschicht (N)].

Zu dem Dreischichtsystem kommt somit ein ganzzahlig Vielfaches einer Zwischenschicht aus einem Metall sowie der im fertigen Zustand darauf befindlichen Metalloxidschicht.

Durch die Auswahl verschiedener Schichtdicken der Einzelschichten können die optischen Reflexionseigenschaften gezielt verändert werden. Auch kann dies geschehen durch die Verwendung verschiedener Metalle bzw. Metalloxide in dem Multischichtsystem.

Als Substrat kann ein Metall oder ein Halbleiter dienen. Es lässt sich jedoch auch ein transparentes Material wie Kunststoff und Glas verwenden, um auch in Transmission eine verbesserte Farbwirkung zu erzielen. Auf das transparente Substrat kann eine semitransparente Zwischenschicht beispielsweise aus einem Metall aufgebracht werden, worauf wieder das erfindungsgemäße Schichtpaket aufgebracht wird.

Bei der Herstellung des erfindungsgemäßen Schichtsystems kann ein nasschemisches Verfahren zur Oxidation der jeweils obersten Metalllage eingesetzt werden. Für den Fall eines Dreischichtsystems (Substrat - Metalloxid - Metallzwischenschicht - Metalloxid) kann ein Metallsubstrat zunächst oxidiert werden. Auf die Oxidschicht kann wieder eine Metallschicht mit einer definierten Dicke aufgebracht werden. Nachfolgend wird diese zweite, obere Metallschicht wieder oxidiert, so dass ein Dreischichtsystem entsteht. Die Abfolge aus Metallisieren - Oxidieren kann mehrfach erfolgen, so dass ein Mehrfachschichtsystem hergestellt werden kann.

Anstelle von nasschemischen Verfahren können die Schichten auch durch einen Vakuumbeschichtungsprozess hergestellt werden. In einem reaktiven Sputterprozess beispielsweise kann dies durch alternierende Beigabe von Sauerstoff während des Sputterns eines Metalls erfolgen, so dass alternierend ein Metall und ein Metalloxid aufgebracht wird.

Im folgenden sollen Beispiele des erfindungsgemäßen Gegenstandes und seiner Herstellung erläutert werden.

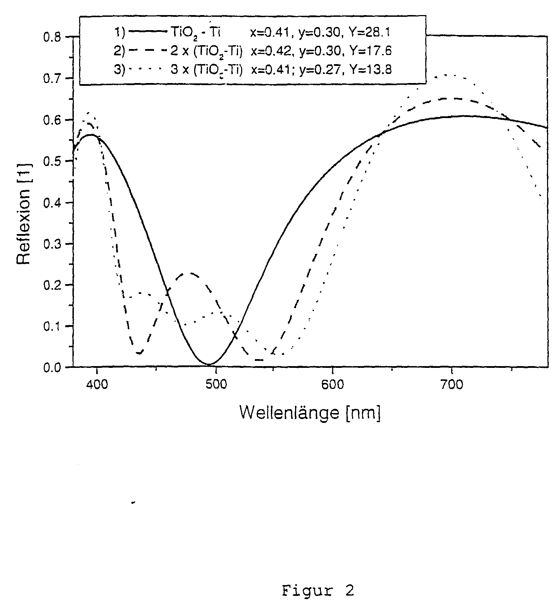

In Fig. 2 sind Reflexionsspektren einer einfachen Oxidschicht auf Titan zusammen mit Reflexionsspektren solcher Multischichten berechnet worden. Kurve 1 zeigt ein Einschichtsystem mit einer 128 nm dicken TiO₂-Schicht auf einem Ti-Substrat. Kurve 2 ein Dreischichtsystem mit einer Abfolge von Schichten aus TiO₂, Ti bzw. TiO₂ mit Schichtdicken von 131 nm, 11 nm bzw. 131 nm auf einem Ti-Substrat. Kurve 3 zeigt eine Abfolge von 5 Schichten TiO₂, Ti, TiO₂, Ti und TiO₂ mit Schichtdicken von 132 nm, 10 nm, 136 nm, 11 nm bzw. 127 nm auf einem Ti-Substrat. Aus Figur 2 ist zu erkennen, dass das einfache System ein Minimum aufweist. Im Unterschied dazu weist die Reflexion der Multischicht ein "W"-Profil auf. Das Auftreten neuer Farbeigenschaften ist darin begründet, dass mit Hilfe der zweiten Oxidschicht und der dünnen Metallschicht der grün-blaue Spektralbereich, wo das Auge noch sehr empfindlich ist, entspiegelt werden kann. Zugleich kann die Kante im langwelligen Spektralbereich weiter in den langweiligen Bereich verschoben werden, so dass insgesamt ein reinerer und satterer roter Farbton entsteht.

In der Abbildung 2 sind die berechneten Farbmaßzahlen (Normfarbwertanteile x und y; Normfarbwert Y) im Normvalenzsystem für einen 2°-Betrachter dargestellt (DIN-Norm 5033 Teil 3). Die Spektren weisen einen ähnlichen Farbort in der Normfarbtafel eines 2°-Betrachters auf, wie an den Normfarbwertanteilen x und y zu erkennen ist. Zugleich unterscheiden sich die Y-Normfarbwerte aber deutlich: Bedingt durch die steile Kante der Reflexion der Doppelschicht bei 560 nm und der damit verbundenen kleineren Reflexion im grünen Spektralbereich, sowie der reduzierten Reflexion im blauen Spektralbereich um 440 nm ist der Y-Normfarbwert dieser Schichten mit einem Wert von 17.6 gegenüber dem einfachen System (Y=28.1) um mehr als 10 Einheiten kleiner, so daß das Doppeischichtsystem insgesamt eine rote Farbe mit höherer Sättigung aufweist. Im Falle des Fünffachsystems lässt sich bei ähnlichen Normfarbwertanteilen von x und y der Normfarbwert Y nochmals auf 13.8 reduzieren, so dass daraus eine noch sattere rote Farbe resultiert.

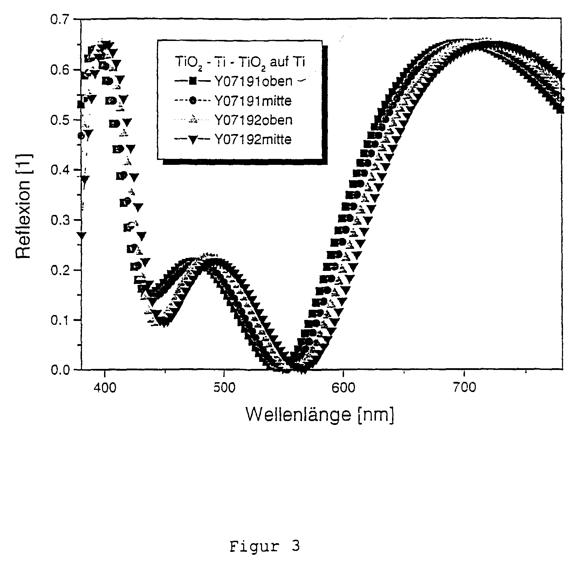

In Fig. 3 sind die Reflexionsspektren von Dreifach-Schichtsystemen gezeigt, bei denen die Schichtdicken geringfügig variiert wurden. Dabei wurden 2 Proben an jeweils zwei verschiedenen Stellen vermessen, wobei die Schichtdicken an der TiO₂-Ti bzw. TiO₂-Schichten auf den Proben Y 07191 oben bzw. mitte und Y 07192 oben bzw. mitte 137 nm, 12 nm und 121 nm bzw. 141 nm, 12 nm und 125 nm bzw. 139 nm, 10 nm und 128 nm bzw. 144 nm, 11 nm und 133 nm betragen.

Tabelle 1 zeigt die Y-Normfarbwerte und Farbwertanteile, die aus den modellierten gemessenen Reflexionsspektren der Proben aus Abbildung 3, sowie aus den gemessenen Reflexionsspektren (in Klammern) berechnet wurden. Die gemessenen Farbwertanteile x, y sowie der Y-Normfarbwert stimmen im Rahmen der Messgenauigkeit mit den aus dem Schichtmodell berechneten Werten überein.

Im vorliegenden Fall wurden die jeweiligen Schichten durch ein Vakuum-Beschichtungsverfahren (Magnetron-Sputterverfahren) sukzessive mit der entsprechenden Schichtdicke auf ein Ti-Substrat aufgebracht. Ein solches Schichtsystem kann aber auch unter Verwendung eines anodischen Oxidationsschrittes hergestellt werden, indem zunächst auf ein Titan-Substrat ein TiO₂-Titan-Schichtstapel aufgebracht wird. Die oberste Titanschicht kann durch anodisches Oxidieren soweit oxidiert werden, wie es erforderlich ist, um den gewünschten Farbton zu erzielen.

**Tabelle 1**

| | Y07191oben | Y07191mitte | Y07192oben | Y07192mitte |
|---|---|---|---|---|
| Normfarbwert Y | 17.4(16.4) | 14.7(14) | 15.2(14) | 12.8(12) |
| Normfarbanteil x | 0.42 (0.43) | 0.39(0.42) | 0.40(0.40) | 0.33(0.36) |
| Normfarbanteil y | 0.26 (0.24) | 0.25(0.24) | 0.26(0.24) | 0.25(0.23) |

## Patentansprüche

1. Beschichteter Gegenstand mit Rotfärbung, dadurch gekennzeichnet, daß er an und/oder auf seiner Oberfläche ein- oder mehrfach eine Abfolge aus einer Metalloxidschicht und einer weiteren Metallschicht aufweist, wobei die oberste Metallschicht entweder die Oberfläche des Gegenstandes bildet oder eine Dicke zwischen 8 und 14 nm aufweist und von einer weiteren Metalloxidschicht bedeckt ist und
wobei die weiteren Metallschichten eine Dicke zwischen 8 und 14 nm besitzen.

2. Gegenstand nach dem vorhergehenden Anspruch, dadurch gekennzeichnet, daß die oberste Metallschicht, sofern sie die Oberfläche des Gegenstandes bildet, eine Dicke zwischen 38 und 514 nm, vorteilhafterweise zwischen 128 und 164 nm aufweist.

3. Gegenstand nach einem der vorhergehenden Ansprüche, dadurch gekennzeichnet, daß unter der ersten Abfolge von Metalloxidschicht und Metallschicht sich eine erste Metallschicht befindet.

4. Gegenstand nach einem der vorhergehenden Ansprüche, dadurch gekennzeichnet, daß die Metalloxidschichten eine Dicke zwischen 30 und 500 nm, vorteilhafterweise zwischen 120 und 150 nm aufweisen.

5. Gegenstand nach einem der vorhergehenden Ansprüche, dadurch gekennzeichnet, daß die erste Metallschicht ein Substrat für die Abfolge von Metalloxidschicht und Metallschicht bildet.

6. Gegenstand nach einem der vorhergehenden Ansprüche, dadurch gekennzeichnet, daß die Metalloxidschichten bzw. die weiteren Metallschichten zumindest teilweise eine Dicke zwischen 10 und 12 nm aufweisen.

7. Gegenstand nach einem der vorhergehenden Ansprüche, dadurch gekennzeichnet, daß das Metall zumindest einer der Metallschichten und zumindest einer der Metalloxidschichten dasselbe Metall ist.

8. Gegenstand nach einem der vorhergehenden Ansprüche, dadurch gekennzeichnet, daß die Metallschichten und/oder Metalloxidschichten zumindest teilweise als Metalle Ti, Al, Au, Ag, Cr, Nb, Ta, Ni, Bi, Cu oder eine Mischung aus diesen Metallen aufweisen.

9. Gegenstand nach einem der vorhergehenden Ansprüche, dadurch gekennzeichnet, daß die erste Metallschicht auf einem Substrat angeordnet ist.

10. Gegenstand nach dem vorhergehenden Anspruch, dadurch gekennzeichnet, daß das Substrat ein Halbleiter, ein Isolator oder ein Metall ist.

11. Gegenstand nach einem der vorhergehenden Ansprüche, dadurch gekennzeichnet, daß das Substrat semitransparent ist.

12. Gegenstand nach einem der Ansprüche 9 bis 11, dadurch gekennzeichnet, daß das Substrat eine Metalllegierung wie insbesondere Stahl, ein Kunststoff oder ein Glas ist.

13. Gegenstand nach mindestens einem der vorhergehenden Ansprüche, dadurch gekennzeichnet, daß das Schichtsystem eine erste Ti-Schicht, eine erste TiO₂-Schicht, eine zweite Ti-Schicht sowie eine darauf befindliche weitere TiO₂-Schicht aufweist.

14. Verfahren zur Herstellung eines Gegenstandes nach einem der vorhergehenden Ansprüche, dadurch gekennzeichnet, daß auf einem Substrat abwechselnd mindestens eine Metalloxidschicht und eine Metallschicht erzeugt wird.

15. Verfahren nach dem vorhergehenden Anspruch, dadurch gekennzeichnet, dass mindestens einer der Metalloxidschichten mit einem anodischen Oxidationsprozess auf der Oberfläche einer Metallschicht erzeugt wird.

16. Verfahren nach Anspruch 14 oder 15, dadurch gekennzeichnet, daß zunächst eine Metalloxidschicht und eine Metallschicht auf einem Substrat abgeschieden wird.

17. Verfahren nach einem der Ansprüche 14 bis 16, dadurch gekennzeichnet, daß zunächst ein oberflächlich oxidiertes Metallsubstrat metallisiert wird, und anschließend die obere Metallschicht durch einen elektrochemischen, thermischen oder einen Plasmaprozess zumindest partiell oxidiert wird.

18. Verfahren nach Anspruch 16 oder 17, dadurch gekennzeichnet, daß die oberste Metallschicht oxidiert wird, bis eine nichtoxidierte Schichtdicke von 8 bis 14 nm, vorteilhafterweise 10 bis 12 nm übrig ist.

19. Verfahren nach einem der Ansprüche 14 bis 18, dadurch gekennzeichnet, daß zum Auftrag einer Metallschicht oder Metalloxidschicht auf ein Substrat ein Vakuum-Beschichtungsprozess verwendet wird.
